**Europäisches Patentamt**

**European Patent Office**

**Office européen des brevets**

(19)

(11) Veröffentlichungsnummer : **0 070 985**
**B1**

(12) # EUROPÄISCHE PATENTSCHRIFT

(45) Veröffentlichungstag der Patentschrift :
24.04.85

(21) Anmeldenummer : 82104228.0

(22) Anmeldetag : 14.05.82

(51) Int. Cl.⁴ : **B 23 B 31/16**

(54) Spannbacke.

(30) Priorität : 29.07.81 DE 3129854

(43) Veröffentlichungstag der Anmeldung :
09.02.83 Patentblatt 83/06

(45) Bekanntmachung des Hinweises auf die Patenterteilung : 24.04.85 Patentblatt 85/17

(84) Benannte Vertragsstaaten :
AT CH FR GB IT LI NL SE

(56) Entgegenhaltungen :
DE-A- 1 808 465
DE-A- 2 736 753
DE-A- 2 817 368
US-A- 3 420 539

(73) Patentinhaber : **Paul Forkardt GmbH & Co. KG**
**Rosenstrasse 44-46**
**D-4000 Düsseldorf 1 (DE)**

(72) Erfinder : **Steinberger, Josef**
**Sebastiansweg 30**
**D-4000 Düsseldorf (DE)**

(74) Vertreter : **Patentanwälte Dipl.-Ing. Alex Stenger**
**Dipl.-Ing. Wolfram Watzke Dipl.-Ing. Heinz J. Ring**
**Kaiser-Friedrich-Ring 70**
**D-4000 Düsseldorf 11 (DE)**

EP 0 070 985 B1

Jouve, 18, rue St-Denis, 75001 Paris, France

## Beschreibung

Die Erfindung betrifft eine Spannbacke für Spannfutter mit mehreren radial verschiebbar im Futterkörper geführten Spannbacken, welche jeweils über eine Verzahnung mit einem im Futterkörper beweglich gelagerten Antriebsglied verbunden sind.

Derartige Spannfutter sind in verschiedenen Ausführungen bekannt. Bei einer als Keilstangenfutter bezeichneten Ausführungsform steht jede an der Rückseite verzahnte Spannbacke mit den Zähnen einer Keilstange in Verbindung. Diese tangential im Futterkörper beweglich geführten Keilstangen sind miteinander durch einen im Futterkörper drehbar gelagerten Synchronring verbunden. Der Antrieb der Keilstangen kann von Hand oder durch eine Kraftbetätigung erfolgen. (Vergl. US-A-3 420 539).

Bei einer anderen Ausführungsform erfolgt der Antrieb der ebenfalls an der Rückseite verzahnten Spannbacken durch sogenannte Treibbacken, welche radial beweglich im Futterkörper geführt sind und beispielsweise über Keilhaken von einem axial beweglichen Futterkolben verstellt werden. Bei dieser Ausführungsform handelt es sich überwiegend um kraftbetätigte Spannfutter.

Obwohl die Verzahnung zwischen den Spannbacken und den Antriebsgliedern im Hinblick auf die höchstmögliche Spannkraft und unter Berücksichtigung eines ausreichenden Sicherheitsfaktors ausgelegt wird, ist es unter ungünstigen Verhältnissen aufgrund von Dauerbelastungen nicht auszuschließen, daß die als Kraftübertragungselement anzusehende Verzahnung bricht. Wenn von einem derartigen Bruch alle diejenigen Zähne der Verzahnung betroffen sind, die beim jeweiligen Bearbeitungsfall (Außenspannung oder Innenspannung) zur Kraftübertragung herangezogen werden, besteht die Gefahr, daß die betroffene Spannbacke aus dem Futterkörper radial nach außen herausgeschleudert wird.

Der Erfindung liegt die Aufgabe zugrunde, eine Spannbacke für Spannfutter der eingangs beschriebenen Art zu schaffen, die auch im Falle eines Bruches der Verzahnung sicher im Futterkörper festgehalten wird, um auf diese Weise die beim bekannten Stand der Technik bestehende Unfallgefahr zu beseitigen.

Die Lösung dieser Aufgabenstellung durch die Erfindung ist dadurch gekennzeichnet, daß an beiden Enden der an der Spannbacke ausgebildeten Verzahnung jeweils ein über die Verzahnungshöhe hinausragender Anschlagnocken ausgebildet ist.

Diese Anschlagnocken sorgen infolge ihrer über die Verzahnungshöhe hinausragenden Ausbildung dafür, daß die Spannbacke durch formschlüssige Anlage am Grundkörper des Antriebsgliedes auch dann im Futterkörper gehalten wird, wenn einige oder alle Zähne entweder der Spannbackenverzahnung oder der Verzahnung des Antriebsgliedes brechen sollten. Weiterhin wird durch die erfindungsgemäße Ausbildung der Anschlagnocken an beiden Enden der Spannbackenverzahnung erreicht, daß die zum Lageversatz zwischen Spannbacke und Antriebsglied dienende Verzahnung an der Spannbacke nur im vorgegebenen Verstellbereich benutzt werden kann. Dieser liegt zwischen den beiden Anschlagnocken, die durch ihre Existenz dafür sorgen, daß stets die notwendige Anzahl von Zähnen miteinander in Eingriff stehen, wogegen es beim bekannten Stand der Technik bisher möglich war, Spannbacke und Antriebsglied derart relativ zueinander anzuordnen, daß nur ein Zahn im Eingriff war, der somit die gesamte Spannkraft übertragen mußte.

Gemäß einem weiteren Merkmal der Erfindung entspricht die Längserstreckung jedes Anschlagnockens mindestens zwei Zahnteilungen, so daß in jedem Fall die erforderliche Sicherheit erreicht wird.

Mit der Erfindung wird insgesamt eine Spannbacke geschaffen, die trotz der durch die erfindungsgemäße Gestaltung erzielten Unfallsicherheit keinen höheren Bearbeitungsaufwand erfordert, da sich die endseitigen Anschlagnocken auf einfache Weise dadurch erzeugen lassen, daß die Verzahnung geringfügig tiefer in der Spannbacke ausgebildet wird und an beiden Enden der Verzahnung keine Zähne und Zahnlücken hergestellt werden. Außerdem ist es nicht erforderlich, irgend welche Änderungen an den mit den erfindungsgemäßen Spannbacken zusammenwirkenden Antriebsgliedern vorzunehmen, so daß erfindungsgemäße Spannbacken auch an vorhandenen Spannfuttern eingesetzt werden können, sofern der Futterkörper um die Höhe des Anschlagnockens stärker ausgefräst wird.

Auf der Zeichnung sind zwei Ausführungsbeispiele der erfingungsgemäßen Spannbacke dargestellt, und zwar zeigen:

Figur 1 einen Längsschnitt durch ein Keilstangenfutter und

Figur 2 einen Längsschnitt durch ein Keilhakenfutter, jeweils unter Verwendung einer erfindungsgemäßen Spannbacke.

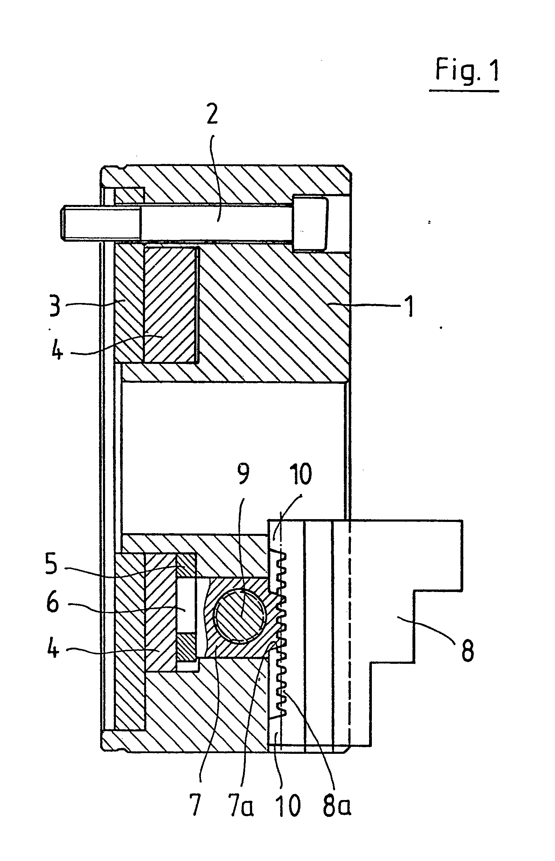

Beim ersten Ausführungsbeispiel nach Fig. 1 handelt es sich um ein Keilstangenfutter mit einem Futterkörper 1, welcher mittels Futterbefestigungsschrauben 2 an einer nicht dargestellten Spindel an der Werkzeugmaschine befestigt wird. Im hinteren, durch einen Deckel 3 abgeschlossenen Teil des Futterkörpers 1 ist ein Treibring 4 drehbar gelagert, der über Gleitsteine 5 und Zapfen 6 Keilstangen 7 miteinander verbindet, die tangential beweglich im Futterkörper 1 geführt sind. Diese Keilstangen 7 sind auf ihrer Vorderseite mit einer verzahnung 7a versehen, welche in eine entsprechende Verzahnung 8a auf der Rückseite der Spannbacken 8 eingreift. Die Spannbacken 8 können hierbei entweder einstückig oder mehrteilig aus Grund- und Aufsatzacke ausgebildet sein.

Die radiale Verstellung der Spannbacken 8, von denen in Fig. 1 lediglich eine Spannbacke 8 dargestellt ist, erfolgt beim dargestellten Ausführungsbeispiel durch eine in einer Keilstange 7 angeordnete, im Futterkörper 1 axial unverschiebbar gelagerte Antriebsspindel 9, welche durch eine Drehbewegung von Hand die Keilstange 7 in Längsrichtung verschiebt und hierbei über die Verzahnungen 7a und 8a eine radiale Verstellung der Spannbacke 8 bewirkt. Über die Zapfen 6 und die in radial verlaufenden Aussparungen des Treibringes 4 verschiebbaren Gleitsteine 5 sowie den Treibring 4 werden die jeweils nicht unmittelbar angetriebenen Keilstangen 7 mitgenommen, so daß sich die Spannbacken 8 in ihren Radialführungen des Futterkörpers 1 gemeinsam bewegen, um eine zentrische Einspannung des nicht dargestellten Werkstücks zu bewirken.

In Fig. 1 ist gut zu erkennen, daß an beiden Enden der an der Spannbacke 8 ausgebildeten Verzahnung 8a jeweils ein über die Verzahnungshöhe hinausragender Anschlagnocken 10 ausgebildet ist. Diese Anschlagnocken 10 sorgen dafür, daß die Spannbacke 8 auch dann durch formschlüssige Anlage am Grundkörper der jeweiligen Keilstange 7 festgehalten wird, wenn einige oder alle Zähne entweder der Verzahnung 7a an der Keilstange 7 oder der Verzahnung 8a an der Spannbacke 8 durch Überlastung brechen sollten. Es wird somit auf zuverlässige Weise dafür gesorgt, daß die Spannbacken 8 auch im Extremfall nicht aus dem sich drehenden Futterkörper 1 herausgeschleudert werden können. Außerdem bewirken diese an den beiden Enden der Verzahnung 8a ausgebildeten Anschlagnocken 10, daß stets die notwendige Anzahl der Zähne zwischen den Verzahnungen 7a und 8a im Eingriff stehen, weil sie einen Lageversatz zwischen Spannbacke 8 und Keilstange 7 auf den zulässigen Bereich beschränken und verhindern, daß die Spannbacke 8 beispielsweise derart zur Keilstange 7 versetzt wird, daß nur ein oder zwei Zähne der Verzahnung 8a mit der Verzahnung 7a der Keilstange 7 in Eingriff sind.

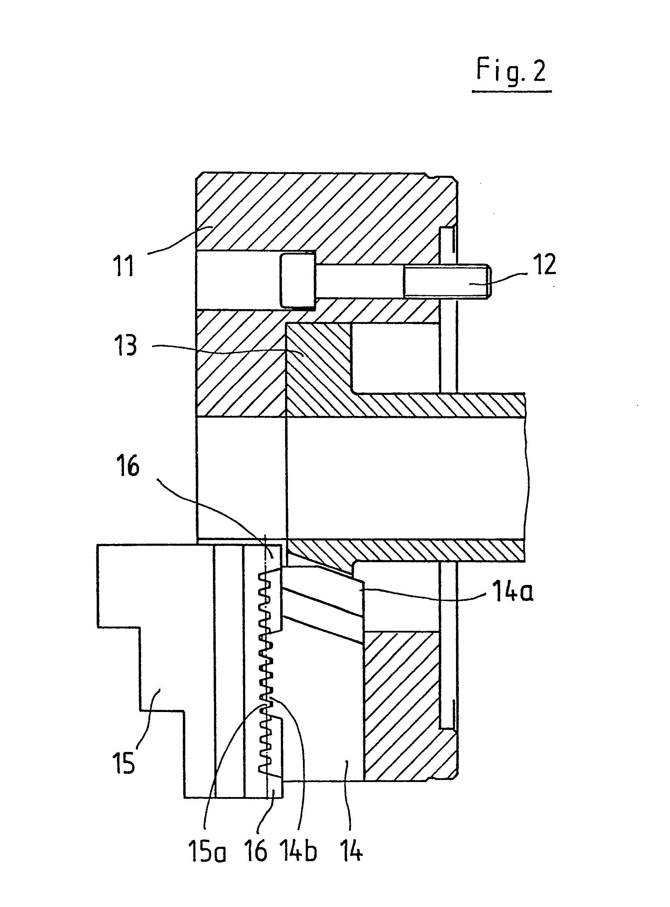

Beim zweiten Ausführungsbeispiel nach Fig. 2 handelt es sich um ein Keilhakenfutter, welches ebenfalls einen mittels Futterbefestigungsschrauben 12 befestigbaren Futterkörper 11 besitzt. In diesem Futterkörper 11 ist ein Futterkolben 13 axial beweglich geführt, der durch eine auf der Zeichnung nicht dargestellte Kraftbetätigung angetrieben wird.

In den Futterkolben 13 greifen im Futterkörper 11 radial beweglich geführte Treibbacken 14 mittels eines Keilhakens 14a ein, der bei einer Axialbewegung des Futterkolbens 13 eine radiale Verstellung der Treibbacken 14 bewirkt. Auf der Vorderseite der Treibbacken 14 is eine Verzahnung 14b ausgebildet, die mit einer entsprechenden Verzahnung 15a der zugehörigen Spannbacke 15 zusammenwirkt. Auch bei dieser Ausführungsform kann die Spannbacke 15 entweder einteilig oder mehrteilig ausgeführt sein.

Auch beim Ausführungsbeispiel der Fig. 2 ist an beiden Enden der an der Spannbacke 15 ausgebildeten Verzahnung 15a ein über die Verzahnungshöhe hinausragender Anschlagnocken 16 ausgebildet, der bei einem Bruch entweder der Verzahnung 14b oder der Verzahnung 14a eine formschlüssige Anlage der Spannbacke 15 am Grundkörper der Treibbacke 14 bewirkt und auf diese Weise sowohl ein Herausschleudern der Spannbacke 15 aus dem Futterkörper 11 als auch einen unzulässigen Eingriff zwischen den beiden Verzahnungen 14b und 15a verhindert.

## Patentansprüche

1. Spannbacke (8, 15) für Spannfutter mit mehreren radial verschiebbar im Futterkörper (1, 11) geführten Spannbacken (8, 15), welche jeweils über eine Verzahnung (8a, 15a) mit einem im Futterkörper (1, 11) beweglich gelagerten Antriebsglied (9, 13) verbunden sind, dadurch gekennzeichnet, daß an beiden Enden der an der Spannbacke (8, 15) ausgebildeten Verzahnung (8a, 15a) jeweils ein über die Verzahnungshöhe hinausragender Anschlagnocken (10, 16) ausgebildet ist.

2. Spannbacke nach Anspruch 1, dadurch gekennzeichnet, daß die Längserstreckung jedes Anschlagnockens (10, 16) mindestens zwei Zahnteilungen entspricht.

## Claims

1. Jaw (8, 15) for a chuck with a plurality of jaws (8, 15) guided so as to be radially slidable in the chuck body, which jaws are connected by means of a gearing (8a, 15a) with a drive member (9, 13) movably disposed in the chuck body (1, 11), characterised in that, at both ends of the gearing (8a, 15a) formed on the jaw (8, 15), an impact boss (10, 16) projecting beyond he height eof the gearing is formed.

2. Jaw according to claim 1, characterised in that the longitudinal extent of each impact boss (10, 16) corresponds to at least two tooth spacings.

## Revendications

1. Mors de serrage (8, 15) pour mandrins de serrage comportant plusieurs mors de serrage (8, 15) guidés dans le corps de mandrin (1, 11) en pouvant coulisser radialement et qui sont reliés chacun par l'intermédiaire d'une denture (8a, 15a) avec un élément d'entraînement (9, 13) monté de manière amovible dans le corps de mandrin (1, 11), caractérisé en ce qu'une saillie de butée (10, 16) qui dépasse la hauteur de la denture est formée sur chacune des deux extrémités de la denture (8a, 15a) formée sur le mors de serrage (8, 15).

2. Mors de serrage selon la revendication 1, caractérisé en ce que la portée longitudinale de chaque saillie de butée (10, 16) correspond au moins à deux divisions de dents.

Fig. 1

Fig. 2